# EUROPEAN PATENT SPECIFICATION

(11) **EP 1 693 765 B1**
(45) Date of publication and mention of the grant of the patent: **09.07.2014**
(21) Application number: 05010081.7
(22) Date of filing: 09.05.2005
(51) Int. Cl.: G06F 17/30

(54) **A data processing system and method**
System und Verfahren zur Datenverarbeitung
Système et méthode de traitement de données

(30) Priority: 16.02.2005 EP 05003260
(43) Date of publication of application: 23.08.2006
(73) Proprietor: SAP AG, 69190 Walldorf (DE)
(72) Inventor: Aakolk, Michael, 69168 Wiesloch (DE); Koch, Wolfgang, 69234 Dielheim (DE)
(74) Representative: Richardt Patentanwälte PartG mbB

(56) References cited:
- US-A1- 2005 021 354
- US-A1- 2005 022 157
- US-A1- 2005 022 163
- BENATALLAH B ET AL INSTITUTE OF ELECTRICAL AND ELECTRONICS ENGINEERS: "Declarative composition and peer-to-peer provisioning of dynamic Web services" PROCEEDINGS 18TH. INTERNATIONAL CONFERENCE ON DATA ENGINEERING. (ICDE'2002). SAN JOSE, CA, FEB. 26 - MARCH 1, 2002, INTERNATIONAL CONFERENCE ON DATA ENGINEERING. (ICDE), LOS ALAMITOS, CA : IEEE COMP. SOC, US, vol. CONF. 18, 26 February 2002 (2002-02-26), pages 297-308, XP010588239 ISBN: 0-7695-1531-2

## Description

### Field of the invention

The present invention generally relates to the field of data processing, and more particularly to enterprise services framework technologies.

### Background and prior art

An enterprise services framework (ESF) provides a service-oriented infrastructure that allows separating and isolating business logic within application architectures in a manner that allows reuse of the business logic within various situations in a flexible and easy-to-build way. The ESF service-oriented architecture includes clients which consume services provided by a server-side generic class - the service manager. The services offered by the service manager are constructed out of elementary pieces. These pieces and the construction principle together form the ESF interface.

The ESF interface is an interface construction principle, which allows building arbitrary methods out of elementary building blocks.

Further, the ESF contains an ESF repository. The ESF repository contains the meta data for the ESF, describing the connection between the business logic implementation and the elements of the virtual programming model.

US 2005/0022163 A1 discloses a method and an apparatus for providing services by an application server. The method includes collecting a request from a customer software component for a service from a provider software component, and checking the request against a set of semantic descriptions in a manifest of methods provided by objects in the provider software component.

ESF is also referred to as Enterprise Services Architecture (ESA). An ESA implementation is available from SAP AG (www.sap.com). ESA features ESI from NetWeaver and many further adaptions from the SAP applications (ESI = Enterprise Services Infrastructure which comprises ESF - enterprise services framework (runtime), ESR - enterprise services repository (meta data for business objects and services), and ESP - enterprise services protocol (cross system communication, web services)

US 2005/022157 A1 describes a software system for application management. Application management may include managing the context of an executing application such that the application is isolated from contexts of other executing applications. Application management may further include providing methods for accessing resources for the context of the executing application, the resources to process application tasks and managing the resources.

US 2005/021354 A1 describes a software system for application business object processing. Business object processing includes receiving a script including a plurality of business object operations for an application, wherein at least one of input in the script comprises a mulfiidimensional data type, and initiating execution of the operations. Processing also includes determining whether a result of an executed operation as input for another operation and, if so, using the result in the input for the other operation.

Benatallah B et al., "declarative composition and peer-to-peer provisioning of dynamic Web services", Proceedings 18th international conference on data engineering, San Jose, CA, Feb 26-March 1, 2002, pages 297-308, describe the design and implementation of a system through which existing web services can be declaratively composed, and the resulting composite services can be executed following the peer to peer paradigm, within a dynamic environment. The described system provides tools for specifying composite services through statecharts, data conversion rules, and provider selection policies. These specifications are then translated into XML documents that can be interpreted by peer-to-peer interconnected software components, in order to provision the composite service without requiring a central authority.

### Summary of the invention

In accordance with the present invention there is provided a data processing system comprising an enterprise services framework interface for receiving a service request from a service consumer for performing a database access, a database for storing transactional data, repository means for storing data descriptive of business objects and for storing data descriptive of a buffer object, processor means for execution of an application program, and a main memory for storing an instance of the buffer object, the instance of the buffer object containing at least one instance of one of the business objects, methods for access to the database and for calling the application program.

The present invention is particularly advantageous as the buffer object provides a set of database access methods. This has the advantage that database access operations are performed in the same way irrespective of the application program that is involved, and further it greatly facilitates the design of application programs as database access functionalities do not need to be included into the application programs. In particular, this has the advantage that the performance parameters of database access operations, such as latency times for performing various database access operations, are identical irrespective of the involved program.

This facilitates the interoperation of various services in an enterprise services framework that consists of a set of relatively autonomous units and services.

In accordance with an embodiment of the invention transactional data is held by the instantiated buffer object in the main memory. For example, the application program checks the transactional data for consistency, plausibility and/or completeness. When the data check has been successful, this is signaled from the application program to the instantiated buffer object. In response the instantiated buffer object uses one of its database access methods to persistently store the transactional data into the database.

In accordance with an embodiment of the invention the business object and the buffer object are stored in one or more service repositories. For example, the business objects are stored in an ESF repository while the buffer object is stored in a separate repository.

In accordance with an embodiment of the invention a user interface layer is provided that contains a user interface pattern. The user interface pattern is parameterized by the user interface layer in order to generate a window for a user's entry of a service request and/or transactional data.

In accordance with an embodiment of the invention the buffer object comprises a method for inserting a newly created instance of one of the business objects, a method for updating a previously created instance of one of the business objects, a method for deleting a previously created instance of one of the business objects, a method of selecting a previously created instance of one of the business objects by means of a respective access key, a method of adding a node to a previously created instance of one of the business objects, and a method for saving business object related data being held in the buffer object into the database.

In accordance with an embodiment of the invention the data processing system comprises a locking component for maintaining data consistency when concurrent database access operations occur.

In accordance with an embodiment of the invention the data processing system comprises a instantiated buffer object being adapted to initiate a database update by means of a database logical unit of work In another aspect the present invention relates to a data processing method for accessing a database. The method comprises the steps of receiving a request from a service consumer for performing a database access operation via an enterprise services framework interface, instantiating a buffer object, the instantiated buffer object comprising at least one instantiated business object, methods for access to a database storing transactional data and for calling an application program, temporarily storing transactional data related to the request as part of the instantiated buffer object in a main memory, calling the application program by the instantiated buffer object for checking the transactional data, persistently storing the transactional data in the database if the data check by the application program has been successful.

In still another aspect the present invention relates to a computer program product for performing such a data processing method for accessing a database.

It is to be noted that the present invention can facilitate ESI contract fulfillment regarding buffering and transactional behavior. Further, it can facilitate to build business object implementations for SAP, customers, and partners. Further, the present invention provides a single point of access for many important ESF features; for example there can be only one code line to maintain due to meta data driven usage of common parts

### Brief description of the drawings

In the following preferred embodiments of the invention are explained in greater detail by way of example only making reference to the drawings in which:
- Figure 1: is a block diagram of a preferred embodiment of a data processing system of the invention,
- Figure 2: is a flowchart illustrating a preferred embodiment of a method of the invention,
- Figure 3: is a block diagram showing another preferred embodiment of a data processing system of the invention,
- Figure 4: is a flow diagram illustrating another preferred embodiment of a method of the invention,
- Figure 5: schematically shows an embodiment of a user interface pattern,
- Figure 6: shows the user interface pattern of fig. 5 after parameterization for a business object for booking a flight.

### Detailed description

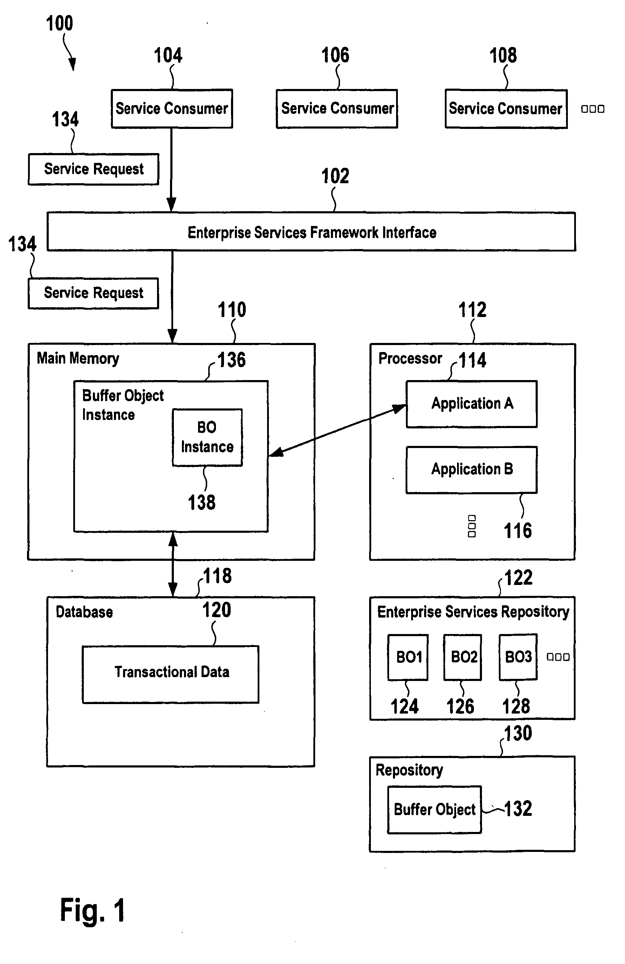

Fig. 1 shows a data processing system 100 that implements an enterprise services framework having an enterprise services framework interface 102. This can include two interfaces: the service consumer interface, also called service consumer API or (generic/local) client proxy, and the service provider interface. The first one is public for all consumers, the later one can also be generic or specific for the respective backend implementation.

The enterprise services framework interface 102 serves as an interface to a number of service consumers 104, 106, 108, ... that use services provided by the enterprise services framework.

The data processing system 100 has a volatile main memory 110, a processor 112 for execution of various application programs, such as application program A 114, application program B 116, ..., a database 118 for persistently storing transactional data 120, an enterprise services framework repository 122 for storing a number of business objects BO1 124, BO2 126, BO3 128, ..., and a repository 130 for storing a buffer object 132. The buffer object 132 carries buffer framework related meta data. In particular, there can be two different types of meta data: meta data which is public to the consumer via the ESF repository 122 and those that is private to the service provider, e.g. internals of the buffer steering. Preferably, the buffer object 132 does only contain the private meta data.

Typically the business objects BO1, BO2, BO3, ... describe complete elementary business processes, such as making a purchase order, providing a product cost estimate, invoicing a customer for a service, etc. The encapsulation of the description of a complete business process in such a business object reduces complexity because the inner structure of the business object remains concealed.

Each of the business objects BO1, BO2, BO3, carries meta data that identifies one of the application programs A, B, ...

The buffer object 132 has a number of methods for performing database access operations. For example, the buffer object 132 can include a method 'REFRESH_BY _RELATION'. The method 'REFRESH_BY _RELATION' is used for adding a node in a respective relation to an instantiated business object. For example, the business objects BO1, BO2, BO3, ... stored in the enterprise services framework repository 122 are described by means of respective entity relationship models that are composed of nodes and relationships linking the nodes. In this instance the method 'REFRESH_BY_RELATION' is used for adding a node and a respective relation to an already instantiated business object.

The method 'INSERT' of the buffer object 132 serves to create a new instance of a business object. The method 'UPDATE' serves to update one or more data values of an already instantiated business object stored in the database 118. The method 'DELETE' of the buffer object 132 serves to delete an instantiated business object that is stored in the database 118. The method 'SELECT' serves to access an instantiated business object stored in the database 118 by means of its access key. The method 'SELECT_BY _RELATION' serves to access an instantiated business object using one of its relations.

Preferably the above described methods are performed with respect to nodes of an business object. Each business object is decribed by an entity relationship model consisting of several nodes and their relations. Core services like UPDATE, DELETE, INSERT are working only on a business object's nodes and not on the business object as a whole.

It is to be noted that the methods 'INSERT', 'UPDATE' and 'DELETE' are not directly performed on the database 118 but on respective data that is temporarily stored in the main memory. Inserted or updated data is persistently written to the database 118 by the method 'SAVE' of the buffer object 132.

In operation e.g. the service consumer 104 can send the service request 134 to the enterprise services framework interface 102. The service request 134 relates to one of the business objects BO1, BO2, BO3, stored in the enterprise services repository 122. In response to the service request 134 the enterprise services framework interface 102 performs an access operation to the repository 130 in order to create an instance of the buffer object 132. The respective buffer object instance 136 is stored in the main memory 110.

Further, an instance of the business object to which the service request 134 relates is also created as an integral part of the buffer object instance 136. In other words, the buffer object instance 136 created in response to the service request 134 carries a business object instance 138 of the business object to which the service request 134 relates.

After creation of the buffer object instance 136 there can be an exchange of data and/ or commands between the buffer object instance 136 and the service consumer 104 in order to perform a transaction. For performance of the transaction various of the database access methods provided by the buffer object instance 136 can be called by the service consumer.

The transactional data is held in the buffer object instance 136, i.e. in the main memory 110, during the performance of the transaction. Before the resultant transactional data is persistently stored in the database 118 by the buffer object instance 136 by means of its method 'SAVE', the buffer object instance 136 calls the application program that is assigned to the business object instance 138. In the example considered here this is the application program A.

The application program A can check the transactional data for completeness, plausibility and/or consistency. Further, it can enrich the transactional data by adding additional information to the transactional data. The application program A responds to the buffer object instance 136 by accepting or declining the transactional data. If the application program A has accepted the transactional data, it is persistently saved in the database 118. If the application program A has declined the transactional data, an error message is generated.

It is to be noted that the application programs A, B, do not need to include methods for accessing the database 118. Rather, all database access methods are implemented in the buffer object instance 136 in a consistent way that is uniform for all service requests and for all application programs. This avoids a need to program database access methods for each of the application programs. This greatly facilitates the programming of application programs as the application programs merely include the business logic but do not need to include the technical infrastructure for performing database access operations. As all such database access methods are provided in a uniform way by the buffer object 132 this has the further advantage that database access latency times are also identical which facilitates the interoperation of the elements of the enterprise services framework.

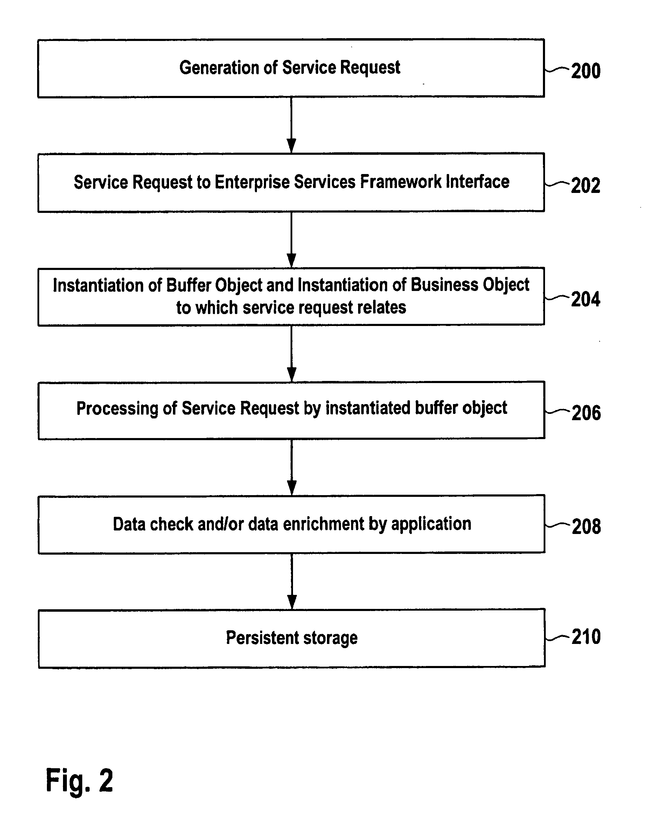

Fig. 2 shows a corresponding flowchart. In step 200 a service request is generated by one of the service consumers coupled to the enterprise services framework. The services request is sent to the enterprise services framework interface in step 202. In response the buffer object that contains the database access methods is instantiated as well as the business object to which the service request relates. The instantiated buffer object carries the instantiated business object as an integral part. Both the instantiated buffer object and its instantiated business object are held in the main memory.

Depending on the kind of service request more than one business object is instantiated. Transactional data that is received together with the service request is also stored as part of the instantiated buffer object in the main memory (step 204).

In step 206 the service request is processed by the instantiated buffer object. In other words, the requested transaction is performed. The resultant transactional data needs to be persistently stored in the database. Before such a persistent storage can occur the data needs to be checked by the application program identified by the instantiated business object (step 208).

For example, the application program checks the data for completeness, plausibility and/or consistency. Further, the application program can perform one or more data processing steps for data enrichment, i.e. for adding of additional information to the transactional data.

The application program responds with an acceptance message accepting the transactional data or by a message that indicates that the application program has declined storage of the transactional data in the database. If information has been added to the transactional data by the application program the additional data is also transmitted back to the instantiated buffer object.

If the buffer object receives an acceptance message from the application program, the transactional data is stored from the main memory to the database in step 210.

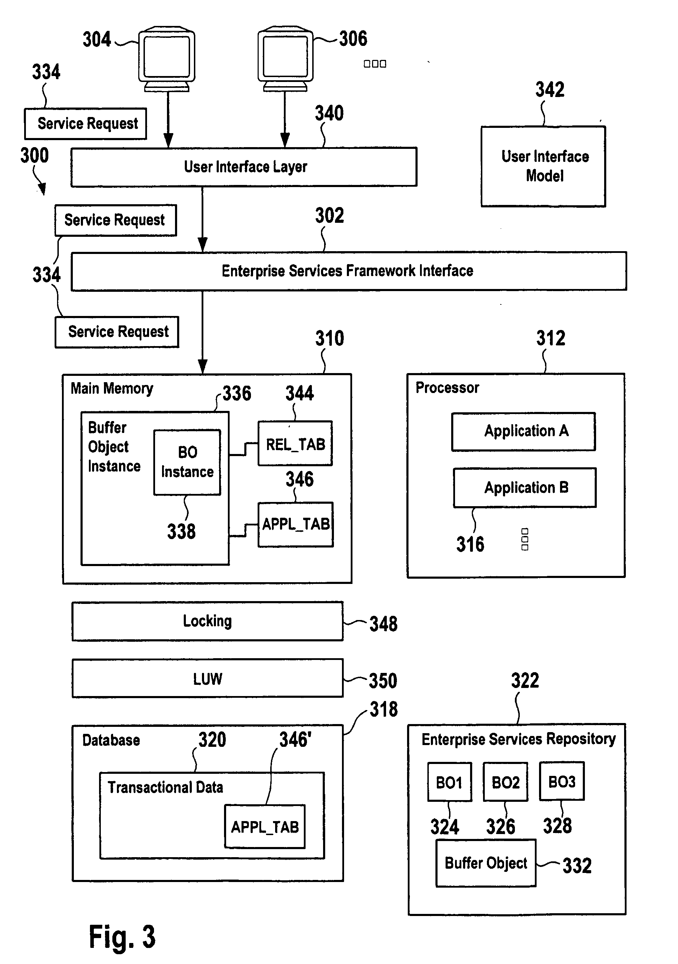

Fig. 3 shows a further embodiment of a data processing system that implements an enterprise services framework, such as an ESI. Elements in the embodiment of fig. 3 that correspond to elements in the embodiment of fig. 1 are designated by like reference numerals. In the embodiment of fig. 3 the service consumers are personal computers 304, 306.

The enterprise services framework implemented by the data processing system 300 comprises a user interface layer 340 and a user interface model 342. The user interface model 342 has a user interface pattern that is parameterized by the user interface layer 340 when a service request 334 is received from one of the personal computers, such as personal computer 304.

In the preferred embodiment considered here the buffer object instance 336 incorporates a relations table 344 and an application data table 346. Both the relations table 344 and the transactional data table 346 are held in the main memory 310. The relations table 344 serves for storage of relationship information of the business object instance 338 and the transactional data table 346 serves for storage of transactional data of the business object instance 338.

After completion of the transaction the transactional data stored in the transactional data table 346 is stored in the respective transactional data table 346' within database 318 provided that the data check performed by the respective application program has resulted in an approval of the database access operation for storage of the transactional data.

The relations table 344 serves as a cache memory during the performance of the transaction in order to avoid duplicate database access operations for reading relations data of the instantiated business object from the database 318. Preferably, not the complete relations data is read but only those data items that are required for performing the transaction.

The locking module 348 protects the transactional data 320 stored in the database 318 if multiple database access operations are requested simultaneously. For example, multiple buffer object instances 336 have been created due to multiple service requests 334 that have been received from various service consumers. These buffer object instances 336 may attempt to perform data save operations for saving transactional data in the database 318 simultaneously. The locking module 348 assures that writing transactional data by one buffer object instance is prevented if the data is being read by another buffer object instance and restricting transactional data from being read from the database 318 that has already been loaded for use in a transaction by another buffer object instance.

Further, the data processing system 300 has a logical unit of work (LUW) module 350. When a logical unit of work, e.g. a transaction, has been completed, the LUW module 350 ensures that the respective transactional data is stored in the database 318 in accordance with the applicable database procedures.

In operation the user interface layer 340 receives the service request 334 from one of the personal computers, e.g. from personal computer 304. The service request 334 is forwarded to the enterprise services framework interface 302. In response, the buffer object instance 336 is created by reading meta information of the buffer object 332 from the enterprise services repository. In contrast to the preferred embodiment considered with respect to fig. 1, the buffer object 332 is stored together with the business objects in the enterprise services repository 322. As in the embodiment of fig. 1 the private meta data that is descriptive of only the buffer internals is separated from public meta data available for all consumers.

Further, the business object instance 338 is created and integrated into the buffer object instance 336. The relations table 344 is filled with relation information of the business object instance 338 by reading required relations information from the database 318. Likewise it can be required to read transactional data 320 of the business object instance 338 from the database 318 in order to perform the requested transaction. Before transactional data is written into the transactional data table 346 by the respective service consumer, such as by means of service request 334, one of the application programs identified by the business object instance 338 can be called in order to check the data for consistency.

After completion of the transaction the resultant transactional data stored in the transactional data table 346 is checked again by the application program identified by the business object instance 338. Only if the data check is successful, the transactional data is written from the transactional data table 346 into the database 318, i.e. into the transactional data table 346', by means of the save method of the buffer object instance 336 using the locking module 348 and the LUW module 350.

It is to be noted that a buffer object can be implemented as follows: For each business object there is one transaction handler, one locking manager, and a number of N business object node buffers for a business object with N nodes. The transaction handler, the locking manager und the N business object node buffers constitute the instantiated buffer object for that business object. Preferably there is a number of N tables 346 (APPL_TAB) that serve as buffers for the N business object nodes.

For another business object the same ABAP objects will be used, but parameterized in another way. Preferably meta data is used to personalize the buffer object for each different business object class.

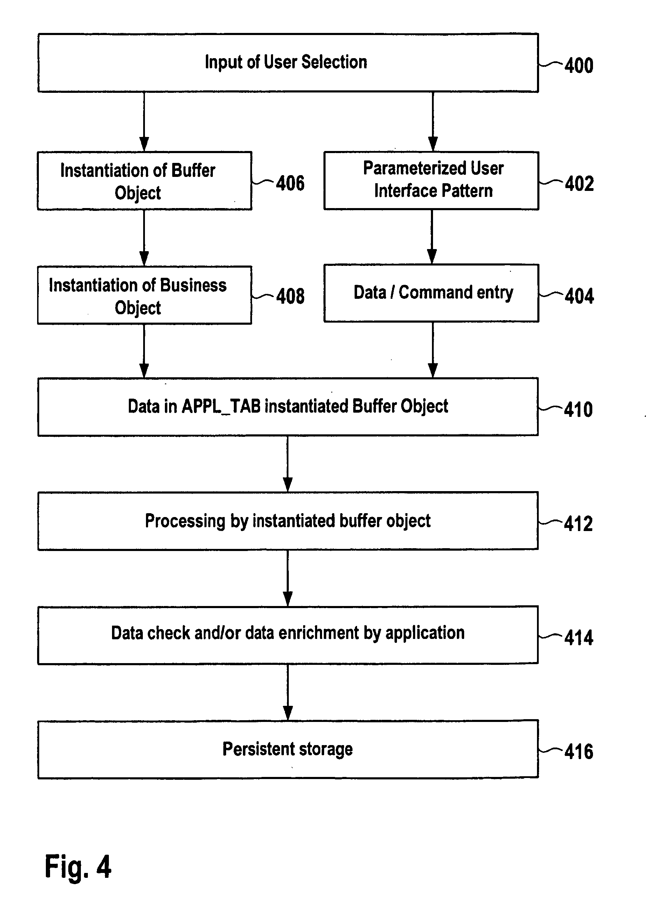

Fig. 4 shows a respective flowchart. In step 400 a user inputs a selection of a business transaction to be performed. In response a respective user interface pattern is parameterized in step 402 such that a user dialogue for data and/or command entry can be performed (step 404). In parallel, the buffer object is instantiated in response to the user selection performed in step 400. In step 408 the business object that corresponds to the requested transaction is instantiated as an integral part of the instantiated buffer object. It is to be noted that the requested transaction may involve two or more business objects; in this instance the required business objects are instantiated in step 408 as an integral part of the instantiated buffer object.

In step 410 transactional data that has been read from the database or received from the user is stored in the transactional data table of the instantiated buffer object. The transactional data is processed by the instantiated buffer object in step 412 until completion of the requested transaction. In step 414 the resultant transactional data is checked by the application program identified by the instantiated business object. In addition the application program can add information to the transactional data for the purpose of data enrichment. If the data check performed by the application program in step 414 has been successful, the transactional data is persistently stored in the database in step 416.

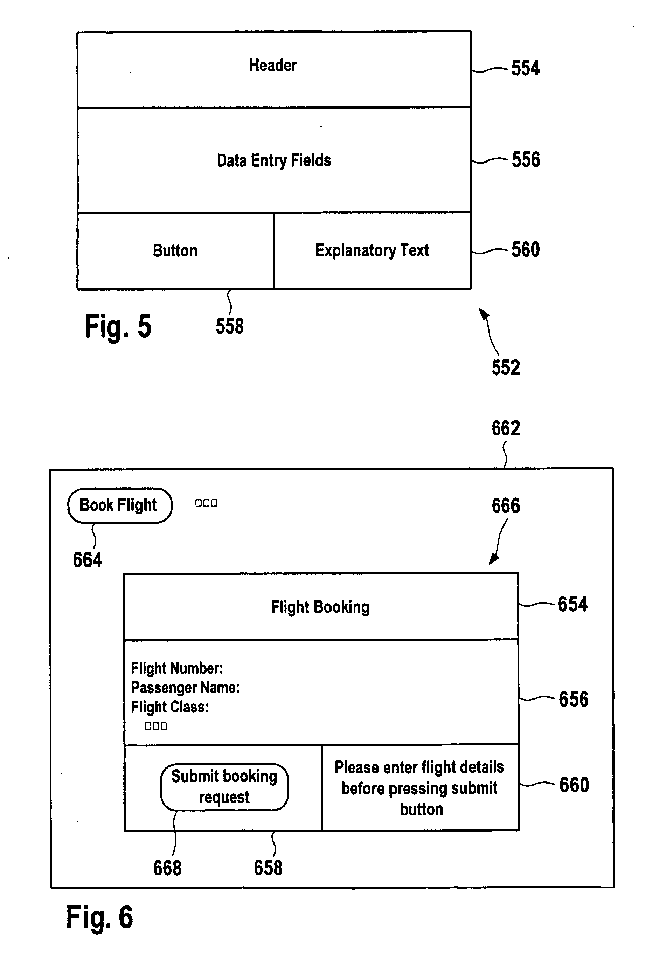

Fig. 5 shows a user interface pattern 552. The user interface pattern 552 has a header portion 554, a data entry portion 556, a control button portion 558 and an explanatory text portion 560. The user interface pattern 552 can be parameterized for the purpose of performing various transactions.

Fig. 6 illustrates an example for booking a flight. A computer monitor 662 displays a button 664 for requesting the booking of a flight. Various other buttons for requesting various other transactions can also be displayed on the computer monitor 662.

If the user double clicks on the button 664 the user interface pattern 552 (cf. fig. 5) is parameterized for the purpose of the flight booking. The resultant window 666 is then displayed on the computer monitor 662. The window 666 has a header 654 that indicates the type of the transaction, i.e. 'flight booking', a data entry portion 656 for entering transactional data such as the flight number, passenger name, flight class, etc, a control button portion 658 that has a control button 668 for calling a method of the respective instantiated buffer object, and an explanatory text portion 660 that explains usage of the window 660, e.g. 'please enter flight details before pressing submit button'.

It is to be noted that the control button portion 658 can comprise more than one control button for calling various methods of the instantiated buffer object.

In operation, the user double clicks on the button 664 in order to start the transaction for booking a flight. In response the window 666 comes up which enables the user to enter the flight details into the data entry portion 656.

For example, the user has to press 'enter' after entry of each data item in the data entry portion 656. Pressing the enter button causes a method call of the instantiated business object in order to have the respective application program check the entered data. For example, after entry of the flight number the instantiated buffer object calls the respective application program in order to check the flight number for correctness.

After all compulsory data fields within the data entry portion 656 have been completed, the user can click on the control button 668 in order to submit the booking request. In response the instantiated buffer object calls the respective application program in order to check the transactional data that has been entered into the data entry portion 656. If the data check is successful, the instantiated buffer object persistently stores the transactional data into the database.

**List of Reference Numerals**

| | |
|---|---|
| 100 | Data processing system |
| 102 | Enterprise services framework interface |
| 104 | Service consumer |
| 106 | Service consumer |
| 108 | Service consumer |
| 110 | Main memory |
| 112 | Processor |
| 114 | Application program |
| 116 | Application program |
| 118 | Database |
| 120 | Transactional data |
| 122 | Enterprise services framework repository |
| 124 | Business object |
| 126 | Business object |
| 128 | Business object |
| 130 | Repository |
| 132 | Buffer object |
| 134 | Service request |
| 136 | Buffer object instance |
| 138 | Business object instance |
| 300 | Data processing system |
| 302 | Enterprise services framework interface |
| 304 | Personal computer |
| 306 | Personal computer |
| 310 | Main memory |
| 312 | Processor |
| 314 | Application program |
| 316 | Application program |
| 318 | Database |
| 320 | Transactional data |
| 322 | Enterprise services framework repository |
| 324 | Business object |
| 326 | Business object |
| 328 | Business object |
| 332 | Buffer object |
| 334 | Service request |
| 336 | Buffer object instance |
| 338 | Business object instance |
| 344 | Relations table |
| 346 | Transactional data table |
| 348 | Locking module |
| 350 | Logical unit of work (LUW) module |
| 340 | User interface layer |
| 342 | User interface model |
| 552 | User interface pattern |
| 554 | Header |
| 556 | Data entry portion |
| 558 | Control button portion |
| 560 | Explanatory text portion |
| 654 | Header portion |
| 656 | Data entry portion |
| 658 | Control button portion |
| 660 | Explanatory text portion |
| 662 | Computer monitor |
| 664 | Button |
| 666 | Window |
| 668 | Control button |

## Claims

1. A data processing method for accessing a database in an enterprise services framework comprising:
- receiving a service request (134; 334) from a service consumer (104, 106, 108, 304, 306,) for performing a database access operation via an enterprise services framework interface (102; 302), the service request relating to one of a plurality of business objects stored in an enterprise services repository (122, 322);
- instantiating a buffer object (132; 332) and creating, in a main memory, at least one instance (138; 338) of the business object to which the service request relates, the instantiated buffer object (136; 336) comprising the at least one instance of the business object, the buffer object comprising methods for access to a database (118; 318) storing transactional data and for calling an application program (114, 116; 314, 316) for checking transactional data for completeness, plausibility and/or consistency, the buffer object comprising one or multiple database access methods for inserting, updating, or deleting the newly or previously created instance of one of the business objects, wherein the buffer object instance and the at least one instance of the business object are created in response to the service request (134; 334),
- processing the service request by the instantiated buffer object, wherein the instantiated buffer object performs a transaction, the processing resulting in transactional data related to the service request,
- temporarily storing the resulting transactional data related to the service request as part of the instantiated buffer object in the main memory (110; 310),
- calling the application program assigned to the business object instance by the instantiated buffer object for checking the resulting transactional data,
- persistently storing said resulting transactional data in the database by the instantiated buffer object only if the data check by the application program has been successful.

2. The data processing method of claim 1, the enterprise services framework having a user interface layer (340) comprising a user interface pattern (552), the method further comprising parameterizing the user interface pattern by the user interface layer for generating a window (666) for a user's entry of the service request.

3. The data processing method of claim 1 or 2, wherein the database access is performed using any one of the following methods of the instantiated buffer object:
- a method for inserting a newly created instance of one of the business object nodes,
- a method for updating a previously created instance of one of the business object nodes,
- a method for deleting a previously created instance of one of the business object nodes,
- a method of selecting a previously created instance of one of the business object nodes by means of a respective access key,
- a method of adding a node to a previously created instance of one of the business objects, and /or
- a method for saving business object related data being held in the buffer object into the database (118; 318).

4. The data processing method according to anyone of claims 1-3, further comprising database locking for maintaining data consistency when concurrent database access operations occur by means of a comprising a locking component (348).

5. The data processing method of any one of the preceding claims 1 to 3, further comprising initiating a database update by means of a database logical unit of work module (350), the database logical unit of work module ensuring that transactional data is stored in the database 318 in accordance with applicable database procedures.

6. A data processing system configured to perform the data processing method according to any of the claims 1-5.

7. A computer-readable program comprising code means adapted to perform all the steps of the method of any one of the preceding claims 1 to 5 when said program is run on a computer.

## Patentansprüche

1. Datenverarbeitungsverfahren zum Zugreifen auf eine Datenbank in einem Unternehmensdienstleistungs-Framework, umfassend:
- Empfangen einer Dienstl.ei stungsanforderung (134, 334) von einem Dienstleistungsnutzer (104, 106, 108, 304 , 306) für die Durchführung einer Datenbankzugriffsoperation über eine Benutzeroberfläche des Unternehmensdienstleistungs-Framework (102; 302), wobei die Dienstleistungsanforderung eines von einer Mehrzahl von Unternehmensobjekten betrifft, die in einer Unternehmensdienstleistungsablage (122, 322) gespeichert sind;
- Instanziieren eines Zwischenspeicherobjekts (132; 332) und Erzeugen mindestens einer Instanz (138; 338) des Unternehmensobjekts, auf das sich die Dienstleistungsanforderung bezieht, in einem Hauptspeicher, wobei das instantiierte Zwischenspeicherobjekt (136; 336) die mindestens eine Instanz des Unternehmensobjekts umfasst, das Zwischenspeicherobjekt Verfahren zum Zugreifen auf eine Datenbank (118; 318), in der Transaktionsdaten gespeichert sind, und zum Aufrufen eines Anwendungsprogramms (114, 116; 314, 316) zum Überprüfen von Transaktionsdaten auf Vollständigkeit, Plausibilität und/oder Konsistenz umfasst, das Zwischenspeicherobjekt eines oder mehrere Datenbankzugriffsverfahren zum Einfügen, Aktualisieren oder Löschen der neu oder bereits früher erzeugen Instanz von einem der Unternehmensobjekte umfasst, wobei die Zwischenspeicherobjektinstanz und die mindestens eine Unternehmensobjektinstanz als Reaktion auf die Dienstleistungsanforderung (134; 334) erzeugt werden,
- Verarbeiten der Dienstleistungsanforderung durch das instanziierte Zwischenspeicherobjekt, wobei das instanziierte Zwischenspeicherobjekt eine Transaktion durchführt, wobei die Verarbeitung Transaktionsdaten zum Ergebnis hat, die auf die Dienstleistungsanforderung bezogen sind,
- Zwischenspeichern der als Ergebnis erhaltenen Transaktionsdaten, die auf die Dienstleistungsanforderung bezogen sind, als Teil des instantiierten Zwischenspeicherobjekts im Hauptspeicher (110; 310),
- Aufrufen des Anwendungsprogramms, das der Unternehmensobjektinstanz zugeordnet ist, durch das instantiierte Zwischenspeicherobjekt, um die resultierenden Transaktionsdaten zu überprüfen,
- endgültiges Speichern der resultierenden Transaktionsdaten in der Datenbank durch das instanziierte Zwischenspeicherobjekt nur dann, wenn die Überprüfung der Daten durch das Anwendungsprogramm erfolgreich war.

2. Datenverarbeitungsverfahren nach Anspruch 1, wobei das Unternehmensdienstleistungs-Framework eine Nutzerschnittstellenschicht (340) aufweist, die ein Nutzerschnittstellenmuster (552) umfasst, wobei das Verfahren ferner die Parametrierung des Nutzerschnittstellenmusters durch die Nutzerschnittstellenschicht umfasst, um ein Fenster (666) für die Eingabe der Dienstleistungsanforderung durch den Nutzer zu erzeugen.

3. Datenverarbeitungsverfahren nach Anspruch 1 oder 2, wobei der Datenbankzugriff unter Verwendung eines der folgenden Verfahren des instantiierten Zwischenspeicherobjekts durchgeführt wird:
- Verfahren zum Einfügen einer neu erzeugten Instanz von einem der Unternehmensobjektknoten,
- Verfahren zum Aktualisieren einer bereits erzeugten Instanz von einem der Unternehmensobjektknoten,
- Verfahren zum Löschen einer bereits erzeugten Instanz von einem der Unternehmensobjektknoten,
- Verfahren zum Auswählen einer bereits erzeugten Instanz von einem der Unternehmensobjektknoten mittels eines jeweiligen Zugriffsschlüssels,
- Verfahren zum Hinzufügen eines Knotens zu einer bereits erzeugten Instanz von einem der Unternehmensobjekte, und/oder
- Verfahren zum Speichern von auf das Unternehmensobjekt bezogenen Daten, die im Zwischenspeicherobjekt gespeichert sind, in der Datenbank (118; 318).

4. Datenverarbeitungsverfahren nach einem der Ansprüche 1-3, ferner das Sperren der Datenbank umfassend, um die Datenkonsistenz aufrechtzuerhalten, wenn gleichzeitige Datenbankzugriffsoperationen stattfinden, mittels einer Sperrkomponente (348).

5. Datenverarbeitungsverfahren nach einem der vorangehenden Ansprüche 1 bis 3, ferner das Initiieren einer Datenbankaktualisierung mittels eines logischen Datenbankverarbeitungseinheitsmoduls (350) umfassend, wobei das logische Datenbankverarbeitungseinheitsmodul sicherstellt, dass Transaktionsdaten in der Datenbank 318 gemäß einschlägigen Datenbankregeln gespeichert werden.

6. Datenverarbeitungssystem, das dafür ausgelegt ist, das Datenverarbeitungsverfahren nach einem der Ansprüche 1 bis 5 durchzuführen.

7. Computerlesbares Programm, Kodierungseinrichtungen umfassend, die dafür ausgelegt sind, alle Schritte des Verfahrens nach einem der vorangehenden Ansprüche 1 bis 5 durchzuführen, wenn das Programm auf einem Computer ausgeführt wird.

## Revendications

1. Procédé pour le traitement de données, pour l'accès à une base de données dans un système de services d'entreprise, comprenant :
- la réception d'une demande de service (134 ; 334) venant d'un consommateur de services (104, 106, 108, 304, 306) pour l'exécution d'une opération d'accès à une base de données par le biais d'une interface de système de services d'entreprise (102 ; 302), la demande de service concernant l'un parmi une pluralité d'objets commerciaux stockés dans un référentiel de services d'entreprise (122, 322) ;
- l'instanciation d'un objet tampon (132 ; 332) et la création, dans la mémoire principale, d'au moins une instance (138 ; 338) de l'objet commercial auquel se rapporte le service, l'objet tampon instancié (136 ; 336) comprenant l'au moins une instance de l'objet commercial, l'objet tampon comprenant des procédés pour l'accès à une base de données (118 ; 318) stockant des données transactionnelles et pour l'appel d'un programme d'application (114, 116; 314, 316) pour la vérification de l'intégrité des données transactionnelles, de la plausibilité et/ou de la cohérence, l'objet tampon comprenant un ou plusieurs procédés d'accès à une base de données, pour l'insertion, la mise à jour ou la suppression de l'instance créée nouvellement ou précédemment de l'un des objets commerciaux, dans lequel l'instance d' objet tampon et l'au moins une instance de l'objet commercial sont créées en réponse à la demande de service (134 ; 334),
- le traitement de la demande de service par l'objet tampon instancié, dans lequel l'objet tampon instancié exécute une transaction, le traitement résultant dans des données transactionnelles relatives à la demande de service,
- le stockage temporaire des données transactionnelles résultantes relatives à la demande de service en tant que partie de l'objet tampon instancié dans la mémoire principale (110 ; 310),
- l'appel du programme d'application attribué à l'instance d'objet commercial par l'objet tampon instancié pour la vérification des données transactionnelles résultantes,
- le stockage permanent desdites données transactionnelles résultantes dans la base de données par l'objet tampon instancié, seulement si les données vérifiées par le programme d'application ont été validées.

2. Procédé pour le traitement de données selon la revendication 1, le système de services d'entreprise possédant une couche d'interface d'utilisateur (340) comprenant un motif d'interface (552), le procédé comprenant en outre le paramétrage du motif d'interface d'utilisateur par la couche d'interface d'utilisateur pour la génération d'une fenêtre (666) pour une entrée d'utilisateur de la demande de service.

3. Procédé pour le traitement de données selon la revendication 1 ou 2, dans lequel l'accès à une base de données est effectué à l'aide de l'un quelconque des procédés suivants de l'objet tampon instancié :
- procédé pour l'insertion d'une instance créée nouvellement de l'un des noeuds d'objet commercial,
- procédé pour la mise à jour d'une instance créée précédemment de l'un des noeuds d'objet commercial,
- procédé pour la suppression d'une instance créée précédemment de l'un des noeuds d'objet commercial,
- procédé pour la sélection d'une instance créée précédemment de l'un des noeuds d'objet commercial au moyen d'une clé d'accès respective,
- procédé pour l'ajout d'un noeud à une instance créée précédemment de l'un des objets commerciaux, et/ou
- procédé pour la sauvegarde d'un objet commercial relatif à des données gardées dans l'objet tampon dans la base de données (118 ; 318).

4. Procédé pour le traitement de données selon l'une quelconque des revendications 1 à 3, comprenant en outre le verrouillage d'une base de données pour le maintien de la cohérence des données lorsque des opérations simultanées d'accès à une base de données ont lieu au moyen d'un comprenant un composant de verrouillage (348).

5. Procédé pour le traitement de données selon l'une quelconque des revendications 1 à 3, comprenant en outre l'initiation d'une mise à jour de base de données au moyen d'une unité logique de base de données d'un module de travail (350), l'unité logique de base de données assurant que les données transactionnelles sont stockées dans la base de données 318 conformément aux procédures applicables aux bases de données.

6. Système de traitement de données configuré pour exécuter le procédé pour le traitement de données selon l'une quelconque des revendications 1 à 5.

7. Programme lisible par ordinateur, comprenant un moyen de codage adapté pour exécuter toutes les étapes du procédé selon l'une quelconque des revendications précédentes 1 à 5, lorsque ledit programme se déroule sur un ordinateur.
